# FASCICULE DE BREVET EUROPEEN

(11) **EP 2 380 173 B1**
(45) Date de publication et mention de la délivrance du brevet: **27.11.2019**
(21) Numéro de dépôt: 09806105.4
(22) Date de dépôt: 23.12.2009
(51) Int. Cl.: G11B 27/28, H04N 5/76

(54) **PROCÉDÉ DE GESTION DE LA DÉTECTION DE PUBLICITÉ DANS UN APPAREIL ÉLECTRONIQUE, PAR EXEMPLE UN DÉCODEUR DE TÉLÉVISION NUMÉRIQUE**
VERFAHREN ZUR VERWALTUNG VON DETEKTION VON WERBUNG IN EINER ELEKTRONISCHEN VORRICHTUNG, WIE ETWA EINEM DIGITALFERNSEHDECODER
METHOD FOR MANAGING ADVERTISING DETECTION IN AN ELECTRONIC APPARATUS, SUCH AS A DIGITAL TELEVISION DECODER

(30) Priorité: 23.12.2008 FR 0859005
(43) Date de publication de la demande: 26.10.2011
(73) Titulaire: SAGEMCOM BROADBAND SAS, 92500 Rueil-Malmaison (FR)
(72) Inventeur: LEGRAND, Mickaël, 92500 Rueil-Malmaison (FR)
(74) Mandataire: Camus, Olivier Jean-Claude
(86) Numéro de dépôt international: PCT/FR2009/052686
(87) Numéro de publication internationale: WO 2010/072986

(56) Documents cités:
- EP-A- 1 001 632
- EP-A- 1 701 351
- EP-A- 1 819 166
- US-A- 5 987 210
- US-A1- 2003 014 747
- US-A1- 2003 123 841
- US-A1- 2003 185 541
- US-A1- 2003 210 887
- US-A1- 2006 064 716
- US-A1- 2006 245 724
- US-B1- 7 269 330
- "Digital Video Broadcasting (DVB); Specification for Service Information (SI) in DVB systems; European Broadcasting Union; Union Européenne de Radio-Télévision EBU-UER; Final draft ETSI EN 300 468" ETSI STANDARD, EUROPEAN TELECOMMUNICATIONS STANDARDS INSTITUTE (ETSI), SOPHIA ANTIPOLIS CEDEX, FRANCE, vol. BC, no. V1.9.1, 1 novembre 2008 (2008-11-01), XP014042274 cité dans la demande
- "INFORMATION TECHNOLOGY - GENERIC CODING OF MOVING PICTURES AND ASSOCIATED AUDIO: SYSTEMS, Recommendation H.222.0, ISO/IEC 13818-1, Draft International Standard" ISO/IEC,, 13 novembre 1994 (1994-11-13), page COMPLETE, XP007911157 cité dans la demande

## Description

### DOMAINE TECHNIQUE DE L'INVENTION

La présente invention a pour objet un procédé de gestion de la détection de plages de publicité dans un appareil électronique, par exemple un décodeur de télévision numérique. L'invention a notamment pour but la détection automatique, par l'appareil électronique considéré, de transitions entre des séquences publicitaires et des programmes autres que des séquences publicitaires (de type film, série télévisée, documentaire ou tout autre programme de télévision non assimilé à ce qui est communément considéré comme une séquence publicitaire) sur un contenu mémorisé sur un disque dur de l'appareil électronique, contenu provenant de l'enregistrement d'un service de télévision sur le disque dur considéré. Par service, on entend classiquement ce que les utilisateurs appellent une chaîne de télévision, par exemple une chaîne diffusant au cours de la journée des programmes successifs les uns aux autres.

Le domaine de l'invention est, d'une façon générale, celui des appareils électroniques aptes à mémoriser du contenu vidéo correspondant à des services de télévision. Dans la présente description, il sera fait référence essentiellement à des appareils électroniques de type décodeurs de télévision numérique, mais d'autres appareils électroniques sont concernés par l'objet de l'invention, tels que des ordinateurs, des appareils de lecture de modules de mémoire de type disque dur...

L'invention sera plus particulièrement décrite dans le cadre des décodeurs recevant un flux de signaux via le réseau Internet, décodeurs qui seront désignés par la suite comme décodeurs IP, mais la mise en œuvre du procédé selon l'invention n'est pas limitée à ce type de décodeurs.

Dans le domaine de la télévision numérique, des décodeurs de télévision numérique sont utilisés, notamment afin d'accéder à un ensemble de chaînes de télévision qui sont transmises cryptées et qui sont décryptées au sein du décodeur. Les décodeurs de télévision sont des organes interfaces entre des systèmes de transmission de signaux de télévision, notamment de signaux de télévision numérique au format MPEG et DVB, et des moniteurs de visualisation. Souvent, le moniteur comporte en lui-même des circuits de décodage de ces signaux de télévision mais ce n'est pas une obligation. Les signaux échangés sont le plus souvent des signaux numériques, mais un décodeur peut aussi avoir des facultés de traitement de signaux analogiques.

Les moyens de transmission qui transmettent les émissions de télévision à ces décodeurs/récepteurs sont soit des moyens de transmission aériens classiques, soit des câbles coaxiaux, voire optiques, soit des satellites de réémission qui desservent une région, soit encore le réseau Internet. Le décodeur comporte des moyens de réception pour recevoir les signaux émis et des moyens de formatage pour transformer les signaux reçus en des signaux applicables directement sur les organes de commande du dispositif de visualisation. Pour un tube cathodique il s'agit par exemple des commandes appliquées sur les organes de balayage et sur les différents canons à électrons produisant des pixels de couleur sur l'écran.

Le formatage se réalise en respectant pour chacune des images à représenter des tables de paramètres. On distingue différents types de tables : les tables SI (Information Système), les tables PSI (Informations Spécifiques de Programmes), les tables NIT (Tables d'Information de Réseau), les tables EIT (Tables d'Evénements), les tables PAT (Table des Programmes Associés), la table CAT (Table de Contrôle d'Accès) ou encore les tables PMT (Table des Composants des Programmes)...

Dans la télévision numérique, il est prévu que les signaux de paramètres soient transmis dans le flux (c'est à dire avec le signal vidéo lui-même) dans des paquets de données. Les paquets de données transmis sont arrangés en sections, les sections comportant classiquement 1024 octets ou, dans certains cas, 4096 octets. Une fois reçus, les différents paquets sont attribués aux tables appropriées. Les paquets d'une même table ne sont pas nécessairement groupés dans une même section. Ils peuvent être répartis dans des sections successives, entrelacées avec des paquets d'informations relatifs à d'autres tables ou au signal vidéo, audio, de données ou autre. Dans chaque section, des identifiants permettent d'attribuer les paquets de données à des tables particulières parmi d'autres. En réception, un décodeur ne sait pas au premier abord comment sont répartis les paquets de données mais il peut reconnaître un découpage des sections. Le décodeur doit donc lire l'identifiant dans chaque section et réorganiser les données pour les affecter aux bonnes tables. Tous les signaux de paramètres relatifs aux différentes tables sont édités par les opérateurs de télévision ou les gestionnaires de média de transport, sont incorporés dans le flux de cet opérateur, et sont acheminés vers les utilisateurs par les différents médias.

En définitive, toute une architecture de tables est ainsi distribuée, en particulier selon la norme EN 300 468 et le but du décodeur est de reconstruire toutes les tables pour disposer des informations de réglage ainsi que des informations à montrer en visualisation pour les utilisateurs.

Dans chaque flux de signaux multiplexés émis, quel que soit le support physique utilisé, une table dite PAT, Program Association Table, est diffusée. Cette table, qui est une table PSI définie dans la norme ISO/IEC 13818-1, donne la liste des services disponibles dans le flux de signaux multiplexés considéré ; elle-même donne ainsi la liste des tables PMT, Program Map Table, (table PSI définie dans la norme ISO/IEC 13818-1), qui sont associées à chacun des services, et qui définit, pour chaque service, la liste des composantes associées à ce service.

Pour chaque service, on trouve dans la table PMT notamment une information de contrôle d'accès associée à ce service. La table CAT de contrôle d'accès permet de prélever cette information et fait exécuter la transmission de cette information vers un microprocesseur du décodeur, ce dernier pouvant alors déterminer si l'utilisateur du décodeur a les droits sur ce service. Si c'est le cas, le microprocesseur renvoie une information appropriée qui permet d'obtenir une clé numérique de décryptage du service considéré. Ce dernier peut alors être restitué en clair sur un écran de visualisation. Une information associée au PID (Program Identification Data), présente dans ces tables, permet de déterminer certaines propriétés des images qui sont diffusées, et notamment renseigner sur la nature des informations transférées, par exemple audio, vidéo, sous-titrage DVB....

La norme MPEG2 permet de multiplexer plusieurs services dans un même Transport Stream (TS) ou canal. Cette norme est complétée par la norme DVB qui permet la constitution et le changement de service, ou zapping sur plusieurs flux de signaux multiplexés au sein d'un même et unique réseau.

### ARRIERE-PLAN TECHNOLOGIQUE DE L'INVENTION

La démande publiée EP 1001632 A, VICTOR COMPANY OF JAPAN [JP], 17 mai 2000, montre un procédé de détection de séquences publicitaires dans un flux d'informations.

Désormais, de nombreux décodeurs de télévision numérique sont équipés d'une unité de mémoire de type disque dur, mémoire de grande capacité permettant le stockage de, par exemple, plusieurs films de cinéma. La durée de mémorisation atteint désormais plusieurs dizaines d'heures. Ainsi, un avantage essentiel d'un décodeur de télévision numérique équipé d'un disque dur est qu'il permet à l'utilisateur de faciliter l'enregistrement de programmes de télévision et de les voir en différé ; l'utilisateur dispose en outre alors d'outils, notamment sa télécommande, qui permettent de mettre en place une navigation rapide dans les différents programmes qu'il a enregistrés sur son disque dur, et notamment de faire défiler rapidement les séquences publicitaires qui sont insérées dans le programme de télévision qu'il a enregistré et qu'il visionne sur son écran.

Actuellement, l'utilisateur a la contrainte de rechercher lui-même la fin des séquences de publicité, en utilisant sa télécommande, et notamment des fonctions d'avance rapide et de retour rapide du contenu mémorisé sur le disque dur. Une telle action prend du temps, est fastidieuse du fait des nombreuses manipulations qu'elle requiert pour se caler exactement au niveau de la fin de la séquence de publicité.

### DESCRIPTION GENERALE DE L'INVENTION

Le procédé selon l'invention propose une solution aux problèmes et inconvénients qui viennent d'être exposés. Dans l'invention, on propose une solution pour que, pour un programme de télévision, préalablement mémorisé sur le disque dur d'un décodeur de télévision numérique, les transitions entre les séquences publicitaires et les séquences autres soient détectées automatiquement par le décodeur considéré. A cet effet, on propose, dans l'invention, de procéder à différentes analyses des signaux mémorisés et/ou de données mémorisées dans le disque dur, signaux et/ou données correspondant au programme visualisé, et d'interpréter des variations desdits signaux comme révélatrices de la présence de telles transitions.

L'invention concerne donc essentiellement un procédé de gestion de la détection de séquences publicitaires dans un flux d'informations mémorisées sur un module de mémoire de masse d'un appareil électronique, ledit flux d'informations correspondant à un extrait de programme de télévision, ledit flux d'informations comportant un premier ensemble d'informations correspondant à un contenu à restituer, et un deuxième ensemble d'informations, correspondant auxdites séquences publicitaires, ledit flux d'informations comportant au moins un ensemble d'informations vidéo, des données de type sous-titrage télétexte, et des données de type sous-titrage DVB, ledit procédé étant caractérisé en ce qu'il comporte les différentes étapes consistant à :
- analyser les informations vidéo pour détecter une transition de format dans des images associées auxdites informations vidéo d'un format utilisé pour lesdites séquences publicitaires à un format utilisé pour ledit contenu ; le cas échéant, mémoriser une première information d'adresse correspondant à la transition détectée, et valider une première condition de détection ;
- analyser les données de type sous-titrage télétexte pour détecter une absence, puis une présence, de sous-titres télétexte associés auxdites informations vidéo ; le cas échéant, mémoriser une deuxième information d'adresse correspondant à la transition détectée, et valider une deuxième condition de détection ;
- analyser les données de type sous-titrage DVB pour détecter une absence, puis une présence, desdites données de type sous-titrage DVB; le cas échéant, mémoriser une troisième information d'adresse correspondant à la transition détectée, et valider une troisième condition de détection ;
- si les trois conditions de détection sont validées, identifier les informations d'adresse mémorisées comme des séquences de transition entre le deuxième ensemble d'informations et le premier ensemble d'informations.

Le procédé selon l'invention peut comporter, en plus des étapes principales qui viennent d'être mentionnées dans le paragraphe précédent, une ou plusieurs caractéristiques supplémentaires parmi les suivantes:
- l'information d'adresse mémorisée correspondant à une séquence de transition effective est celle associée à une image vidéo destinée à être restituée en premier ; par séquence de transition effective, on désigne une séquence qui correspond effectivement à une séquence de transition entre une séquence publicitaire et une séquence avec un contenu autre qu'un contenu publicitaire ;
- le procédé comporte l'étape supplémentaire consistant à poursuivre une opération de lecture, préalablement entamée, du flux d'informations considéré au niveau de l'information d'adresse mémorisée ;

- la transition de format dans les images associées auxdites informations vidéo consiste en une transition de format de type 4/3 vers un format de type 16/9 ;
- l'étape d'analyse des informations vidéo est réalisée linéairement, ou par dichotomie ;
- l'étape d'analyse des données de type télétexte est réalisée linéairement ;
- l'étape d'analyse des données de sous-titrage associées au flux est réalisée linéairement, ou par dichotomie ;
- le procédé comporte l'étape préalable consistant à recevoir une instruction émise par un utilisateur de déclenchement dudit procédé ;
- le flux d'informations dans lequel la détection de séquences publicitaires est gérée correspond à une durée préalablement déterminée d'informations vidéo, et en ce que, en l'absence de conditions de détection validée, il comporte l'étape supplémentaire consistant à émettre un message d'avertissement.
- le flux d'informations dans lequel la détection de séquences publicitaires est gérée débute au niveau d'une image visualisée par l'utilisateur lorsque ledit utilisateur émet l'instruction de déclenchement dudit procédé ;
- le procédé selon l'invention est mis en œuvre automatiquement.
- la mise en œuvre automatique du procédé selon l'invention est périodique.

Les différentes caractéristiques supplémentaires du procédé selon l'invention, dans la mesure où elles ne s'excluent pas mutuellement, sont combinées selon toutes les possibilités d'association pour aboutir à différents exemples de mise en œuvre de l'invention.

La présente invention se rapporte également à un appareil électronique, avantageusement de type décodeur de télévision numérique apte à mettre en œuvre le procédé selon l'invention, avec ses caractéristiques principales, et éventuellement une ou plusieurs caractéristiques supplémentaires qui viennent d'être mentionnées.

L'invention et ses différentes applications seront mieux comprises à la lecture de la description qui suit et à l'examen des figures qui l'accompagnent.

### BREVE DESCRIPTION DE LA FIGURE

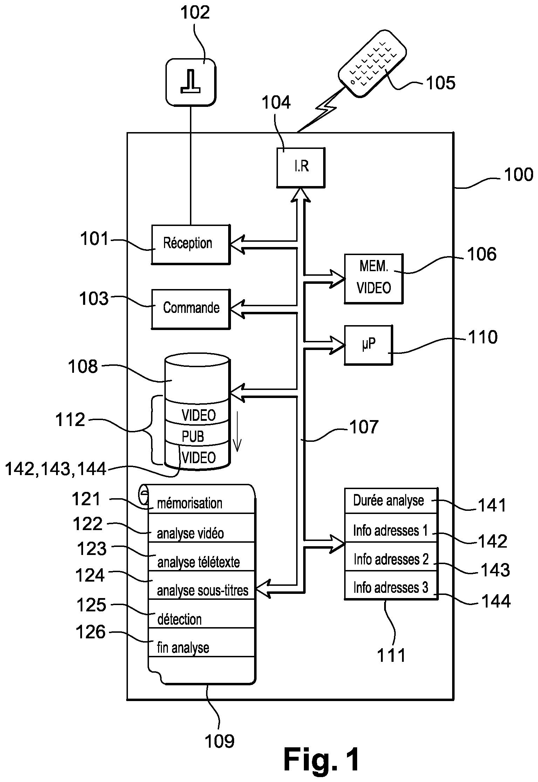

Celle-ci n'est présentée qu'à titre indicatif et nullement limitatif de l'invention. La figure 1, unique, montre un exemple de décodeur de télévision numérique selon l'invention, adapté à un exemple de mise en œuvre du procédé selon l'invention.

### DESCRIPTION DES FORMES DE REALISATION PREFEREES DE L'INVENTION

A la figure 1, on a représenté un décodeur de télévision numérique 100 selon l'invention. Le décodeur 100 comporte un module de réception 101 de signaux télévisuels, qui reçoit via une connexion internet 102, éventuellement après traitement par un boîtier intermédiaire, un ensemble de flux disponibles. Le module de réception 101 pourrait être également connecté à un réseau de télévision câblé, à une antenne, ou à un système de réception par satellite. Par ailleurs, le module de réception 101 est connecté à un circuit de commande 103 du module de réception 101. Le circuit de commande 103 transmet au module de réception 101 un signal de commande indiquant quel service il doit extraire de l'ensemble de flux disponibles reçus via la connexion Internet 102. Les signaux relatifs au service extrait sont numérisés au sein du module de réception 101.

Un capteur 104, dans cet exemple infrarouge, reçoit des signaux émis par une télécommande 105. Une cellule infrarouge du capteur 104 délivre un signal qui permet à l'utilisateur de contrôler le circuit de commande 103. Pour une restitution instantanée du service extrait, les signaux numérisés issus du module de réception 101 sont envoyés dans une mémoire vidéo 106 via un bus de communication bidirectionnel 107. Un module de mémoire de type disque dur 108 est également relié au bus de communication bidirectionnel 107. Ainsi, lorsque le décodeur 100 est programmé, ou reçoit une commande, pour enregistrer un service de télévision donné, le flux d'informations relatif à ce service de télévision est mémorisé dans le disque dur. D'une manière générale, un disque dur est un module de mémoire de grande capacité, amovible ou non, susceptible de présenter une taille de mémoire pouvant atteindre plusieurs centaines de giga-octets. Bien évidemment, le procédé selon l'invention peut être mis en œuvre avec un module de mémoire de taille plus restreinte.

Le bus de communication bidirectionnel 107 véhicule des signaux de commandes, d'adresses et/ou de données. Il permet d'assurer également un échange d'informations entre le module de réception 101, le circuit de commande 103 et le capteur 104, et :
- une mémoire de programmes 109, destinée à la gestion des différentes opérations qui peuvent intervenir au sein du décodeur 100, et notamment aux différentes opérations qui peuvent intervenir pour la mise en œuvre du procédé selon l'invention ; la mémoire de programmes comporte un ensemble d'applications logicielles qui peuvent être remplacées par des circuits électroniques spécifiques ;
- un microprocesseur 110, gérant l'ensemble des échanges entre les différents éléments du décodeur 100; l'utilisateur peut déclencher directement, au moyen de la télécommande 105, la mise en œuvre d'applications contenues dans la mémoire de programmes 109 ;
- une mémoire de données 111.

Le fonctionnement du décodeur de télévision numérique 100 selon l'invention est à présent expliqué.

De manière classique, un flux d'informations 112 reçu par le décodeur 100 peut être mémorisé, au moyen d'une application particulière, dite application de mémorisation 121, de la mémoire de programmes 109, dans le module de mémoire de type disque dur 108. La mémorisation peut être déclenchée instantanément par l'utilisateur ou suite à une opération préalable de programmation.
Le flux d'informations 112 correspond ainsi à un extrait de programme de télévision, avec au moins un ensemble d'informations vidéo, et éventuellement des données de type télétexte, et/ou des données de sous-titrage de type DVB et plus généralement contenues dans le flux transport défini dans les normes MPEG 2 / ISO/IEC 13818-1.

En outre, le flux d'informations 112 comporte typiquement deux ensembles d'informations distinguables : un premier ensemble d'informations, dites informations utiles, correspondant à du contenu que l'utilisateur souhaite effectivement visionner, et un deuxième ensemble d'informations, dites informations ajoutées, correspondant à des séquences publicitaires. Le deuxième ensemble d'informations peut parfois être un ensemble vide. Le procédé selon l'invention vise à permettre à l'utilisateur de s'affranchir de la visualisation du deuxième ensemble d'informations. Ainsi, on propose, dans l'invention, de procéder à une analyse du flux d'informations 112 mémorisé en effectuant différentes vérifications destinées à détecter une transition entre des informations du premier ensemble d'informations et des informations du deuxième ensemble d'informations.

Ainsi, dans l'invention, on propose les opérations d'analysé suivantes :
- une première opération d'analyse, mise en œuvre au moyen d'une application particulière 122, dite application d'analyse des informations vidéo, de la mémoire de programmes 109. Avantageusement, cette application détecte, dans le flux d'informations mémorisé 112, le passage d'un format 4/3, typiquement utilisé pour des séquences de publicité, à un format 16/9, typiquement utilisé pour certaines émissions de télévision, ou pour des films. L'information relative au format, 4/3 ou 16/9 est présente dans des en-têtes des paquets de données relatives aux informations vidéo, et est donc directement accessible par ladite application.

L'analyse des données vidéo peut être réalisée selon une première méthode ou selon une deuxième méthode. La première méthode, dite méthode d'analyse linéaire, consiste à parcourir les informations vidéo, et plus particulièrement à lire la donnée relative au format des images vidéo considérées, de manière continue, dans l'ordre dans lequel les données vidéo sont destinées à être restituées ; on part ainsi, suite à une instruction utilisateur, ou de manière automatique, comme il le sera expliqué ultérieurement, d'une adresse mémoire du disque dur 108, adresse mémoire correspondant à l'image en cours de visualisation, et on lit l'information relative au format d'image pour toute image suivante à restituer. L'analyse prend fin soit lorsque l'information relative au format d'image révèle une image au format 16/9, soit au bout d'un certain nombre d'images analysées, correspondant à une durée, dite durée d'analyse 141, de restitution préalablement déterminée, équivalente par exemple à sept minutes d'images à restituer, ladite information relative à la durée d'analyse étant mémorisée dans une zone mémoire particulière, de la mémoire de données 111. Typiquement, pour analyser sept minutes d'images à restituer, seules quelques secondes sont suffisantes.

La deuxième méthode, dite méthode d'analyse par dichotomie, consiste à appliquer par recherche dichotomique, dans l'espace mémoire du disque dur à analyser, la première image vidéo dont le format est 16/9 après une série d'images vidéo dont le format est 4/3. La recherche dichotomique est appliquée sur un ensemble de données vidéo correspondant aux images comprise entre l'image en cours de visualisation, et une dernière image analysée, par exemple l'image espacée de l'image en cours par la durée d'analyse 141.

Lorsqu'une transition d'un format d'image de type 4/3 vers un format d'image de type 16/9 est détecté, on mémorise une première information d'adresse 142 dans une zone mémoire de la mémoire de données 111, ladite première information d'adresse renvoyant aux données vidéo de la première image vidéo dont le format est de type 16/9 dans les données analysées.
- une deuxième opération d'analyse, mise en œuvre au moyen d'une application particulière 123, dite application d'analyse des données de type sous-titre télétexte, de la mémoire de programmes 109. Avantageusement, cette application détecte, dans le flux d'informations mémorisé 112, le passage d'Informations vidéo où des données de type sous-titre télétexte ne sont pas présentes, comme c'est le cas dans les séquences publicitaires, à des informations vidéo où des données de type sous-titre télétexte sont présentes, comme c'est le cas pour des films ou certaines émissions de télévision. L'information relative au retour de données de type sous-titre télétexte est obtenue par une analyse du flux du service, dans laquelle on détecte la présence ou non de sous-titres télétexte. L'analyse est ainsi avantageusement réalisée de manière linéaire sur l'ensemble des données à analyser. Lorsqu'une transition marquant le retour d'informations de type données télétexte est détectée, on mémorise une deuxième information d'adresse 143 dans une zone mémoire de la mémoire de données 111, ladite deuxième information d'adresse renvoyant aux données vidéo de la première image vidéo pour laquelle les données de type sous-titre télétexte réapparaissent.
- une troisième opération d'analyse, mise en œuvre au moyen d'une application particulière 124, dite application d'analyse des données de type sous-titre DVB, de la mémoire de programmes 109. Avantageusement, cette application détecte, dans le flux d'informations mémorisé 112, le passage d'Informations vidéo où des données de type sous-titre DVB ne sont pas présentes, comme c'est le cas dans les séquences publicitaires, à des informations vidéo où des données de type sous-titre DVB sont présentes, comme c'est le cas pour des films ou certaines émissions de télévision. L'information relative au retour de données de type sous-titre DVB est obtenue par l'analyse des informations associées au PID, précédemment mentionnée. L'analyse peut ainsi être réalisée de manière linéaire ou par dichotomie sur l'ensemble des données à analyser. Lorsqu'une transition marquant le retour d'informations de type données de type sous-titre DVB est détectée, on mémorise une troisième information d'adresse 144 dans une zone mémoire de la mémoire de données 111, ladite troisième information d'adresse renvoyant aux données vidéo de la première image vidéo pour laquelle les données de type sous-titre DVB réapparaissent.

Une application particulière 125, dite application de détection de fin de séquences publicitaires, de la mémoire de programmes 109, permet d'interpréter les résultats des différentes analyses qui viennent d'être mentionnées. Dans un premier mode de mise en œuvre, si soit la première information d'adresse 142, soit la deuxième information d'adresse 143, soit la troisième information d'adresse 144 est mémorisée, l'application de détection de fin de séquences publicitaires détecte la fin d'une séquence publicitaire au niveau de l'adresse mémorisée. Si plusieurs adresses sont mémorisées, l'adresse marquant la fin de la séquence publicitaire est considérée comme étant celle associée à une l'image vidéo destinée à être affichée en premier lors de l'opération de restitution.

Dans un autre mode de mise en œuvre du procédé selon l'invention, il faut qu'au moins deux adresses aient été mémorisées pour que l'application de détection de fin de séquences publicitaires détermine la transition entre une séquence non publicitaire et une séquence publicitaire. Dans un tel cas, l'adresse marquant la fin de la séquence publicitaire est considérée comme étant celle associée à une l'image vidéo destinée à être affichée en premier lors de l'opération de restitution.

Dans la pratique, la mise en œuvre du procédé selon l'invention peut s'opérer de la manière suivante : un utilisateur visionne un flux d'informations mémorisé sur le disque dur 108 de son appareil électronique, par exemple le décodeur 100. Lorsqu'une séquence de publicité débute, et qu'il souhaite ne pas visualiser cette fonction, il déclenche la mise en œuvre du procédé selon l'invention par exemple par l'appui sur une touche de la télécommande 105. Les différentes opérations d'analyse précédemment mentionnées sont alors exécutées. Si ces opérations d'analyse aboutissent à la mémorisation d'une des informations d'adresse précédemment mentionnées, alors la lecture du flux d'informations est reprise au niveau de l'adresse mémorisée, et retenue par l'application de détection de fin de séquences publicitaires.

Si les opérations d'analyse n'aboutissent à aucune mémorisation d'une des informations d'adresse qui viennent d'être mentionnées, une application particulière 126, dite application de fin d'analyse, avertit l'utilisateur que la fin de la séquence de publicité n'a pas pu être détectée, par exemple en affichant un message approprié 144, mémorisé dans la mémoire de données 111, sur l'écran de visualisation, et la lecture du flux d'informations se poursuit au niveau où l'utilisateur avait souhaité l'interrompre.

Dans un autre mode d'utilisation possible, le procédé selon l'invention est mis en œuvre de façon automatique, par exemple périodiquement, par exemple toutes les cinq minutes. Ainsi, pour une mise en œuvre automatique, les opérations d'analyse sont exécutées pour déterminer si l'image en cours de visualisation correspond à une séquence de publicité. Si c'est le cas, le procédé tel que précédemment décrit est poursuivi. Sinon, la lecture du flux d'informations se poursuit normalement.

Le décodeur selon l'invention comporte notamment des moyens pour mettre en œuvre le procédé selon l'invention, et notamment la mémoire de programmes 109 avec les différentes applications qui viennent d'être mentionnées.

## Revendications

1. Procédé de gestion de la détection de séquences publicitaires dans un flux d'informations (112) mémorisées sur un module de mémoire de masse (108) d'un appareil électronique (100), ledit flux d'informations (112) correspondant à un extrait de programme de télévision, ledit flux d'informations (112) comportant un premier ensemble d'informations correspondant à un contenu à restituer, et un deuxième ensemble d'informations, correspondant auxdites séquences publicitaires, ledit flux d'informations comportant au moins un ensemble d'informations vidéo, des données de type sous-titrage télétexte et des données de type sous-titrage DVB,
ledit procédé étant **caractérisé en ce qu'**il comporte les différentes étapes consistant à :
- analyser (122) les informations vidéo pour détecter une transition de format dans des images associées auxdites informations vidéo d'un format utilisé pour lesdites séquences publicitaires à un format utilisé pour ledit contenu ; le cas échéant, mémoriser une première information d'adresse (142) correspondant à la transition détectée, et valider une première condition de détection ;
- analyser (123) les données de type sous-titrage télétexte pour détecter une absence, puis une présence, de sous-titres télétexte associés auxdites informations vidéo ; le cas échéant, mémoriser une deuxième information d'adresse (143) correspondant à la transition détectée, et valider une deuxième condition de détection ;
- analyser (124) les données de type sous-titrage DVB pour détecter une absence, puis une présence, desdites données de type sous-titrage DVB; le cas échéant, mémoriser une troisième information d'adresse (144) correspondant à la transition détectée, et valider une troisième condition de détection ;
- si les trois conditions de détection sont validées, identifier (125) les informations d'adresse mémorisées comme des séquences de transition entre le deuxième ensemble d'informations et le premier ensemble d'informations.

2. Procédé selon la revendication précédente **caractérisé en ce que** l'information d'adresse mémorisée correspondant à une séquence de transition effective est celle associée à une image vidéo destinée à être restituée en premier

3. Procédé selon l'une quelconque des revendications précédentes **caractérisé en ce qu'**il comporte l'étape supplémentaire consistant à poursuivre une opération de lecture, préalablement entamée, du flux d'informations considéré au niveau de l'information d'adresse mémorisée.

4. Procédé selon l'une quelconque des revendications précédentes **caractérisé en ce que** la transition de format dans les images associées auxdites informations vidéo consiste en une transition de format de type 4/3 vers un format de type 16/9.

5. Procédé selon l'une quelconque des revendications précédentes **caractérisé en ce que** l'étape d'analyse des informations vidéo est réalisée linéairement, ou par dichotomie.

6. Procédé selon l'une quelconque des revendications précédentes **caractérisé en ce que** l'étape d'analyse des données de type sous-titrage télétexte est réalisée linéairement.

7. Procédé selon l'une quelconque des revendications précédentes **caractérisé en ce que** l'étape d'analyse des données de sous-titrage DVB est réalisée linéairement, ou par dichotomie.

8. Procédé selon l'une quelconque des revendications précédentes **caractérisé en ce qu'**il comporte l'étape préalable consistant à recevoir une instruction émise par un utilisateur de déclenchement dudit procédé.

9. Procédé selon la revendication précédentes **caractérisé en ce que** le flux d'informations dans lequel la détection de séquences publicitaires est gérée correspond à une durée préalablement déterminée (141) d'informations vidéo, et **en ce que**, en l'absence de conditions de détection validée, il comporte l'étape supplémentaire consistant à émettre (126) un message d'avertissement.

10. Procédé selon la revendication précédente **caractérisé en ce que** le flux d'informations (112) dans lequel la détection de séquences publicitaires est gérée débute au niveau d'une image visualisée par l'utilisateur lorsque ledit utilisateur émet l'instruction de déclenchement dudit procédé.

11. Procédé selon l'une au moins des revendications 1 à 7 **caractérisé en ce qu'**il est mis en œuvre automatiquement.

12. Procédé selon la revendication précédente **caractérisé en ce que** la mise en oeuvre automatique est périodique.

13. Appareil électronique (100) apte à mettre en œuvre le procédé selon l'une au moins des revendications précédentes.

14. Appareil électronique selon la revendication précédente **caractérisé en ce qu'**il est de type décodeur de télévision numérique.

## Patentansprüche

1. Verwaltungsverfahren der Erkennung von öffentlichen Sequenzen in einem Fluss von Informationen (112), die auf einem Modul eines Massespeichers (108) eines elektronischen Geräts (100) gespeichert sind, wobei der genannte Fluss von Informationen (112) einem Auszug eines Fernsehprogramms entspricht, wobei der genannte Fluss von Informationen (112) eine erste Gruppe von Informationen, die einem wiederzugebenden Inhalt entsprechen, und eine zweite Gruppe von Informationen, die den genannten Werbesequenzen entsprechen, umfasst, wobei der genannte Fluss von Informationen wenigstens eine Gruppe von Videoinformationen, Daten vom Typ Teletext-Untertitelung und Daten vom Typ Untertitelung DVB umfasst,
wobei das genannte Verfahren **dadurch gekennzeichnet ist, dass** es die unterschiedlichen Schritte umfasst, bestehend aus:
- dem Analysieren (122) der Videoinformationen zum Erkennen eines Formatübergangs von einem Format, das für die genannten Werbesequenzen verwendet wird, auf ein Format, das für den genannten Inhalt verwendet wird, in Bildern, die den genannten Videoinformationen zugeordnet sind; ggf. Speichern einer ersten Adressinformation (142), die dem erkannten Übergang entspricht, und Bestätigen einer ersten Erkennungsbedingung;
- Analysieren (123) der Daten vom Typ Teletext-Untertitelung zum Erkennen eines Fehlens, dann eines Vorhandenseins von Teletext-Untertitelungen, die den genannten Videoinformationen zugeordnet sind; ggf. Speichern einer zweiten Adressinformation (143), die dem erkannten Übergang entspricht, und Bestätigen einer zweiten Erkennungsbedingung;
- Analysieren (124) der Daten vom Typ Untertitelung DVG zum Erkennen eines Fehlens, dann eines Vorhandenseins der genannten Daten vom Typ Untertitelung DVB; ggf. Speichern einer dritten Adressinformation (144), die dem erkannten Übergang entspricht, und Bestätigen einer dritten Erkennungsbedingung;
- Wenn die drei Erkennungsbedingungen bestätigt sind, Identifizieren (125) der gespeicherten Adressinformationen als Übergangssequenzen zwischen der zweiten Gruppe von Informationen und der ersten Gruppe von Informationen.

2. Verfahren gemäß dem voranstehenden Anspruch, **dadurch gekennzeichnet, dass** die gespeicherte Adressinformation, die einer effektiven Übergangssequenz entspricht, die ist, die einem Videobild zugeordnet ist, das dazu bestimmt ist, als Erstes wiedergegeben zu werden.

3. Verfahren gemäß irgendeinem der voranstehenden Ansprüche, **dadurch gekennzeichnet, dass** es den zusätzlichen Schritt umfasst, der im Verfolgen einer zuvor begonnenen Leseoperation des Flusses von Informationen besteht, der in Bezug auf die gespeicherte Adressinformation betrachtet wird.

4. Verfahren gemäß irgendeinem der voranstehenden Ansprüche, **dadurch gekennzeichnet, dass** der Formatübergang in den Bildern, die den genannten Videoinformationen zugeordnet sind, aus einem Formatübergang vom Typ 4/3 zu einem Format vom Typ 16/9 besteht.

5. Verfahren gemäß irgendeinem der voranstehenden Ansprüche, **dadurch gekennzeichnet, dass** der Analyseschritt der Videoinformationen linear oder per Zweiteilung realisiert wird.

6. Verfahren gemäß irgendeinem der voranstehenden Ansprüche, **dadurch gekennzeichnet, dass** der Analyseschritt der Daten vom Typ Teletext-Untertitelung linear realisiert wird.

7. Verfahren gemäß irgendeinem der voranstehenden Ansprüche, **dadurch gekennzeichnet, dass** der Analyseschritt der Untertitelungsdaten DVB linear oder per Zweiteilung realisiert wird.

8. Verfahren gemäß irgendeinem der voranstehenden Ansprüche, **dadurch gekennzeichnet, dass** es den vorherigen Schritt umfasst, bestehend aus dem Empfangen einer Anweisung, die von einem Auslösenutzer des genannten Verfahrens ausgegeben wird.

9. Verfahren gemäß dem voranstehenden Anspruch, **dadurch gekennzeichnet, dass** der Fluss von Informationen, bei dem das Erkennen von Werbesequenzen verwaltet wird, einer zuvor bestimmten Dauer (141) von Videoinformationen entspricht, und dass es bei Fehlen von Bedingungen der bestätigten Erkennung den zusätzlichen Schritt umfasst, der im Ausgeben (126) einer Warnmeldung besteht.

10. Verfahren gemäß dem voranstehenden Anspruch, **dadurch gekennzeichnet, dass** der Fluss von Informationen (112), bei dem das Erkennen von Werbesequenzen verwaltet wird, in Bezug auf ein Bild beginnt, das durch den Nutzer visualisiert wird, wenn der genannte Nutzer die Anweisung zum Auslösen des genannten Verfahrens ausgibt.

11. Verfahren gemäß wenigstens einem der Ansprüche 1 bis 7, **dadurch gekennzeichnet, dass** es automatisch ausgelöst wird.

12. Verfahren gemäß dem voranstehenden Anspruch, **dadurch gekennzeichnet, dass** die automatische Umsetzung periodisch ist.

13. Elektronisches Gerät (100), das zum Umsetzen des Verfahrens gemäß wenigstens einem der voranstehenden Ansprüche geeignet ist.

14. Elektronisches Gerät gemäß dem voranstehenden Anspruch, **dadurch gekennzeichnet, dass** es vom Typ Dekodierer für digitales Fernsehen ist.

## Claims

1. Method for managing the detection of advertising sequences in a flow of information (112) memorised on a mass memory module (108) of an electronic device (100), said flow of information (112) corresponding to an excerpt of a television programme, said flow of information (112) comprising an first set of information corresponding to a content to be restored, and a second set of information, corresponding to said advertising sequences, said flow of information comprising at least one set of video information, data of the teletext subtitle type and data of the DVB subtitle type,
said method being **characterised in that** it comprises the various steps consisting in:
- analysing (122) the video information in order to detect a transition in the format in the images associated with said video information from a format used for said advertising sequences to a format used for said content; where applicable, memorising a first piece of address information (142) corresponding to the transition detected, and validating a first detection condition;
- analysing (123) the data of the teletext subtitle type in order to detect an absence, then a presence, of teletext subtitles associated with said video information; where applicable, memorising a second piece of address information (143) that corresponds to the transition detected, and validating a second detection condition;
- analysing (124) the data of the DVB subtitle type in order to detect an absence, then a presence, of said data of the DVB subtitle type; where applicable, memorising a third piece of address information (144) that corresponds to the transition detected, and validating a third detection condition;
- if the three detection conditions are validated, identifying (125) the address information memorised as transition sequences between the second set of information and the first set of information.

2. Method according to the preceding claim **characterised in that** the piece of address information memorised corresponding to an effective transition sequence is the one associated with a video image intended to be restored first.

3. Method according to any preceding claim **characterised in that** it comprises the additional step that consists in continuing a read operation, initiated beforehand, of the flow of information considered on the piece of address information memorised.

4. Method according to any preceding claim **characterised in that** the transition in the format in the images associated with said video information consists of a transition in the format of the 4/3 type to a format of the 16/9 type.

5. Method according to any preceding claim **characterised in that** the step of analysing the video information is carried out linearly, or by dichotomy.

6. Method according to any preceding claim **characterised in that** the data analysis step of the teletext subtitle type is carried out linearly.

7. Method according to any preceding claim **characterised in that** the step of DVB subtitle data analysis is carried out linearly, or by dichotomy.

8. Method according to any preceding claim **characterised in that** it comprises the prior step consisting in receiving an instruction emitted by a user for triggering said method.

9. Method according to the preceding claims **characterised in that** the flow of information wherein the detection of the advertising sequences is managed corresponds to a duration determined beforehand (141) of video information, and **in that**, in the absence of validated detection conditions, it comprises the additional step consisting in emitting (126) a warning message.

10. Method according to the preceding claim **characterised in that** the flow of information (112) wherein the detection of advertising sequences is managed begins on an image viewed by the user when said user emits the instruction for triggering said method.

11. Method according to at least one of claims 1 to 7 **characterised in that** it is implemented automatically.

12. Method according to the preceding claim **characterised in that** the automatic implementation is periodic.

13. Electronic device (100) able to implement the method according to at least one of the preceding claims.

14. Electronic device according to the preceding claim **characterised in that** it is of the digital television decoder type.
